# FASCICULE DE BREVET EUROPEEN

(11) **EP 3 288 782 B1**
(45) Date de publication et mention de la délivrance du brevet: **07.08.2019**
(21) Numéro de dépôt: 16718713.7
(22) Date de dépôt: 27.04.2016
(51) Int. Cl.: B60C 11/18, B60C 11/00, B60C 1/00, B60C 11/04, B60C 11/03, B60C 3/06

(54) **PNEUMATIQUE AVEC UNE BANDE DE ROULEMENT COMPORTANT DES ELEMENTS DE RENFORCEMENT**
REIFEN MIT EINER LAUFFLÄCHE MIT VERSTÄRKUNGSELEMENTEN
TYRE WITH A TREAD COMPRISING REINFORCING ELEMENTS

(30) Priorité: 28.04.2015 FR 1553798; 29.10.2015 FR 1560388
(43) Date de publication de la demande: 07.03.2018
(73) Titulaire: Compagnie Générale des Etablissements Michelin, 63000 Clermont-Ferrand (FR)
(72) Inventeur: PERRIN, Frédéric, 63040 Clermont-Ferrand Cedex 9 (FR); PALLOT, Patrick, 63040 Clermont-Ferrand Cedex 9 (FR)
(74) Mandataire: Bauvir, Jacques
(86) Numéro de dépôt international: PCT/EP2016/059429
(87) Numéro de publication internationale: WO 2016/174100

(56) Documents cités:
- EP-A1- 2 708 382
- EP-A1- 3 031 627
- EP-A2- 0 869 016
- JP-A- 2014 113 921
- US-A1- 2015 107 735

## Description

### Domaine de l'invention

La présente invention est relative aux pneumatiques, et plus particulièrement à un pneumatique dont les performances d'adhérence sont améliorées.

### État de la technique

De manière connue, la bande de roulement d'un pneumatique, qu'il soit destiné à équiper un véhicule de tourisme ou un véhicule poids lourd, est pourvue d'une sculpture comprenant notamment des éléments de sculpture ou blocs élémentaires délimités par diverses rainures principales, longitudinales ou circonférentielles, transversales ou encore obliques, les blocs élémentaires pouvant en outre comporter diverses incisions ou lamelles plus fines. Les rainures constituent des canaux destinés à évacuer l'eau lors d'un roulage sur sol mouillé et les parois de ces rainures définissent les bords d'attaque et de fuite des éléments de sculpture, en fonction du sens du virage.

Pour améliorer l'adhérence d'un pneumatique, et plus particulièrement pour l'adhérence sur sol sec et sur sol humide, il est bien connu de diminuer la rigidité ou la dureté du mélange caoutchouteux constituant de la bande de roulement. Cette diminution de rigidité de la bande de roulement permet à celle-ci de mieux épouser la surface rugueuse du sol de roulage et ainsi la surface réelle de contact avec le sol de roulage est augmentée et la performance d'adhérence améliorée par rapport à une bande de roulement dont le mélange caoutchouteux est plus rigide.

Cependant, notamment dans le cas de l'adhérence transversale, l'utilisation d'un mélange caoutchouteux de bande de roulement moins rigide favorise le cisaillement des éléments de sculpture, leur basculement et cela génère de fortes surpressions sur les arêtes d'attaque des éléments de sculpture qui à leur tour génèrent des échauffements très importants.

Ces surpressions et ces échauffements peuvent contribuer à un endommagement très rapide de la bande de roulement du pneumatique et à une exploitation non optimale du potentiel d'adhérence du mélange de la bande de roulement.

Le document EP0869016 A2 divulgue un pneumatique avec une bande de roulement comportant deux mélanges caoutchouteux superposés, dans lequel le mélange intérieur a une rigidité inférieure à celle du mélange extérieur pour conserver une bonne adhérence du pneumatique après une usure partielle de la bande de roulement et l'apparition en surface de ce mélange intérieur. Les documents JP2014/11392 A et US2015/107735 présentent aussi des pneumatiques avec des bandes de roulement comportant deux mélanges caoutchouteux distincts.

Pour améliorer la performance d'adhérence des pneumatiques en stabilisant les éléments de sculpture, le document EP 2 708 382 A1 propose un pneumatique ayant un axe de rotation et un plan médian perpendiculaire à l'axe de rotation, comprenant deux bourrelets, deux flancs reliés aux bourrelets, un sommet relié aux extrémités des deux flancs avec une armature de sommet, et une bande de roulement radialement extérieure, la bande de roulement comprenant une pluralité d'éléments de sculpture avec des faces latérales et une face de contact destinée à venir en contact avec la chaussée pendant le roulage du pneumatique, une pluralité de rainures circonférentielles chacune délimitée par des faces latérales d'éléments de sculpture adjacents, en vis-à-vis l'une par rapport à l'autre, et délimitée par un fond, et un renforcement circonférentiel constitué d'un mélange caoutchouteux de rigidité supérieure à la rigidité du mélange du reste de la bande de roulement.

Ce pneumatique est tel que le renforcement circonférentiel comporte un élément de renforcement placé sous chaque rainure circonférentielle et s'étendant radialement de la surface radialement intérieure de la bande de roulement jusqu'à former la totalité du fond de la rainure.

Le renforcement des rainures circonférentielles ainsi réalisé permet d'augmenter la poussée de dérive du pneumatique mais la présence d'un mélange rigide en fond de rainure entraîne une difficulté de moulage des témoins d'usure. On constate aussi une augmentation sensible de la résistance au roulement liée notamment à la limitation des mises à plat transversale et longitudinale.

### Description brève de l'invention

L'invention a pour objet un pneumatique selon le préambule de la revendication 1 **caractérisé en ce que,** le pneumatique ayant un côté extérieur et un côté intérieur, le renforcement circonférentiel comporte un élément de renforcement placé dans les éléments de sculpture disposés axialement extérieurement relativement à l'une des première et deuxième rainures circonférentielles de la bande de roulement en allant de l'extérieur vers l'intérieur et axialement à proximité de ladite rainure circonférentielle, **en ce que** l'élément de renforcement s'étend radialement de la surface radialement extérieure de l'armature de sommet vers l'extérieur de la bande de roulement avec une largeur axiale qui diminue progressivement et sur une hauteur partielle ou totale de l'épaisseur de la bande de roulement et **en ce que** les éléments de sculpture disposés axialement intérieurement relativement à ladite première rainure circonférentielle ne comportent pas d'éléments de renforcement disposés à proximité des faces axialement intérieures de ladite rainure.

L'élément de renforcement circonférentiel disposé ainsi sur le bord de fuite de la nervure ou des éléments de sculpture les plus sollicités du côté extérieur de la bande de roulement du pneumatique lors d'un roulage rapide en virage s'oppose par sa forte raideur en compression et en cisaillement au cisaillement et au basculement de ces éléments de sculpture et permet ainsi de conserver une surface de contact avec le sol de roulage importante, de limiter les surpressions sur le bord d'attaque de la nervure ou des éléments de sculpture et ainsi de limiter les échauffements ainsi que l'usure rapide du bord d'attaque de la nervure. La présence d'un élément de renforcement pour une seule rainure permet déjà d'obtenir une amélioration sensible des performances d'adhérence transversale des pneumatiques d'un véhicule.

L'élément de renforcement circonférentiel a aussi comme caractéristique essentielle de s'appuyer directement sur l'armature du sommet du pneumatique. Cela permet d'avoir un point d'appui pour rigidifier le sommet et la bande de roulement.

Il est très avantageux que les éléments de sculpture disposés axialement intérieurement relativement à la première rainure circonférentielle ne comportent pas d'éléments de renforcement disposés à proximité des faces axialement intérieures de cette rainure. En effet, la présence de tels éléments de renforcement sur le bord d'attaque de la deuxième nervure de la bande de roulement est susceptible d'entraîner une dégradation des propriétés d'adhérence transversale du pneumatique et du véhicule en raison de la rigidité élevée du matériau de ces éléments de renforcement lorsque ces éléments de renforcement entrent en contact avec le sol de roulage.

Il est aussi à noter que la réduction du volume de gomme de haute rigidité entraîne une diminution sensible de la résistance au roulement du pneumatique relativement aux pneumatiques divulgués par le document EP 2 708 382 A1 cité.

De préférence, le renforcement circonférentiel comporte deux éléments de renforcement placés respectivement dans les éléments de sculpture adjacents extérieurement à la première et à la deuxième rainure circonférentielle de la bande de roulement en allant de l'extérieur vers l'intérieur et axialement à proximité des première et deuxième rainures circonférentielles.

Cela renforce l'effet favorable en termes d'adhérence transversale.

Avantageusement, la bande de roulement ayant au moins trois rainures circonférentielles, le renforcement circonférentiel comporte aussi un élément de renforcement placé dans les éléments de sculpture adjacents extérieurement à la troisième rainure circonférentielle de la bande de roulement en allant de l'extérieur vers l'intérieur et axialement à proximité de la troisième rainure circonférentielle.

Le renforcement circonférentiel peut aussi avantageusement comporter des éléments de renforcement placés dans tous les éléments de sculpture adjacents extérieurement à une rainure circonférentielle et axialement à proximité de cette rainure circonférentielle.

Selon un mode de réalisation avantageux, le renforcement circonférentiel comporte un élément de renforcement placé dans les éléments de sculpture adjacents intérieurement à la rainure circonférentielle la plus proche axialement du côté intérieur du pneumatique.

Cela permet de stabiliser les nervures ou éléments de sculpture du côté intérieur du pneumatique lorsque ce côté intérieur est sollicité en tant que bord d'attaque en virage. On retrouve ainsi le même effet anti basculement et anti cisaillement lié à la forte rigidité de compression de l'élément de renforcement.

Selon un exemple de réalisation avantageux, la bande de roulement comportant au moins quatre rainures circonférentielles, le renforcement circonférentiel comporte deux éléments de renforcement placés respectivement dans les éléments de sculpture adjacents intérieurement à la première et à la deuxième rainure circonférentielle de la bande de roulement en allant de l'intérieur vers l'extérieur et axialement à proximité des première et deuxième rainures circonférentielles.

Selon un autre mode de réalisation avantageux, les éléments de renforcement circonférentiels sont disposés de façon symétrique relativement au plan médian du pneumatique.

Selon un exemple de réalisation particulier, la bande de roulement ayant une rainure circonférentielle traversée par le plan médian, deux éléments de renforcement circonférentiels sont disposés axialement à proximité et de part et d'autre de la rainure circonférentielle traversée par le plan médian.

La forme de l'élément de renforcement circonférentiel est de section effilée radialement vers l'extérieur. Cela renforce son efficacité en tant que point d'appui. Les parois de cet élément de renforcement circonférentiel peuvent être concaves, convexes ou en escalier.

De préférence, l'angle des deux parois latérales du ou des éléments de renforcement circonférentiels est compris entre 35 et 45 degrés.

En dessous de 35 degrés, l'efficacité du point d'appui est réduite et au-delà de 45 degrés, le volume de l'élément de renforcement circonférentiel devient trop important.

Selon un mode de réalisation préférentiel, les éléments de renforcement comportant une base dont la hauteur radiale est strictement inférieure à la distance entre le fond d'une rainure circonférentielle et la surface radialement extérieure de l'armature de sommet et une partie haute, la partie haute s'étend radialement extérieurement jusqu'au moins la demi-hauteur des faces latérales des rainures circonférentielles adjacentes.

Cette hauteur minimale des parties hautes des éléments de renforcement circonférentiels est utile pour obtenir un effet de stabilisation tout au long de la vie du pneumatique.

Selon un mode de réalisation avantageux, la partie haute des éléments de renforcement constitue au moins une partie de la face latérale de la rainure circonférentielle adjacente.

Selon un autre mode de réalisation avantageux, la partie haute des éléments de renforcement est disposé à une distance axiale de 1 à 8 mm et préférentiellement de 2 à 5 mm de la face latérale de la rainure circonférentielle adjacente.

Ce mode de réalisation permet de ne pas perturber le moulage des rainures circonférentielles de la bande de roulement tout en conservant un effet sensible d'amélioration des performances d'adhérence transversale des pneumatiques d'un véhicule.

La base des éléments de renforcement peut avantageusement s'étendre axialement sous au moins une partie des fonds des rainures circonférentielles adjacentes.

Ce mode de réalisation a l'avantage de renforcer l'efficacité du ou des éléments de renforcement circonférentiels tout en conservant pour les fonds des rainures le mélange de la bande de roulement et ainsi améliorer le moulage des témoins d'usure

Selon un autre exemple de réalisation, la base des éléments de renforcement s'étend axialement sous les éléments de sculpture du côté opposé aux rainures circonférentielles adjacentes.

Comme précédemment, cela a l'avantage de stabiliser les éléments de renforcement circonférentiels.

Selon un autre exemple de réalisation avantageux les bases des éléments de renforcement peuvent être jointives axialement et s'étendre axialement sur au moins 50 % de la largeur axiale de la bande de roulement du pneumatique.

Très avantageusement, les bases des éléments de renforcement jointives axialement s'étendent axialement sur au plus la largeur axiale de ladite armature de sommet. Cela permet de garder une bonne mise à plat des deux épaules du pneumatique et de limiter les conséquences en termes de résistance au roulement du pneumatique de l'usage d'un mélange caoutchouteux de très haute rigidité.

Avantageusement le mélange caoutchouteux constitutif du renforcement circonférentiel a un module dynamique G* mesuré à 60°C à 10 Hz et sous une contrainte de cisaillement alterné de 0,7 MPa supérieur à 20 MPa et préférentiellement supérieur à 30 MPa.

Très avantageusement, le mélange caoutchouteux de bande de roulement a un module dynamique G* mesuré à 60°C à 10 Hz et sous une contrainte de cisaillement alterné de 0,7 MPa inférieur ou égal à 1,3 MPa et de préférence inférieur à 1,1 MPa.

La présence du renforcement circonférentiel permet d'utiliser pleinement les capacités d'adhérence d'un tel mélange de bande de roulement de très faible rigidité.

Cela est particulièrement utile dans le cas d'un pneumatique pour véhicule de tourisme.

Selon un autre mode de réalisation avantageux, la bande de roulement comporte deux mélanges distincts disposés axialement l'un au-dessus de l'autre. Le mélange disposé radialement intérieurement est usuellement appelé « sous-couche ». Cette sous-couche peut avoir des propriétés hystérétiques plus favorables que le mélange en contact avec la chaussée ce qui améliore le bilan global de résistance au roulement du pneumatique.

Alternativement, la sous-couche peut aussi être plus rigide que le mélange caoutchouteux de la bande de roulement pour rigidifier celle-ci.

L'invention concerne plus particulièrement les pneumatiques destinés à équiper des véhicules à moteur de type tourisme, SUV (« *Sports Utility Vehicles* »), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

### Description des Figures

Les objets de l'invention sont maintenant décrits à l'aide du dessin annexé dans lequel :
- la figure 1 représente de manière très schématique (sans respect d'une échelle spécifique), une coupe radiale d'un pneumatique conforme à un mode de réalisation de l'invention ;
- les figures 2 à 13 présentent en coupe radiale des bandes de roulement de pneumatiques conformes à différents modes de réalisation de l'invention ; et
- la figure 14 présente en coupe radiale le mode de réalisation de bande de roulement testé.

### Description détaillée de l'invention

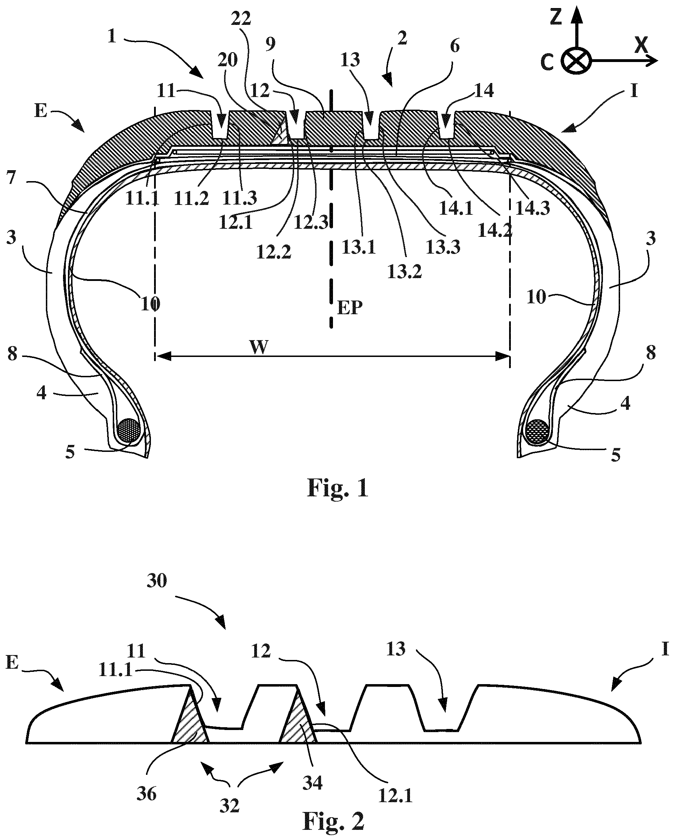

La figure 1 représente de manière schématique une coupe radiale d'un bandage pneumatique ou pneumatique incorporant un renforcement circonférentiel 20 selon un mode de réalisation de l'invention.

Le pneumatique 1 a un côté extérieur E destiné à être placé vers l'extérieur d'un véhicule et un côté intérieur I destiné à être placé vers l'intérieur d'un véhicule. Ce pneumatique présente ainsi une asymétrie de la bande de roulement.

La figure 1 indique aussi les directions axiale X, circonférentielle C et radiale Z ainsi que le plan médian EP (plan perpendiculaire à l'axe de rotation du pneumatique qui est situé à mi-distance des deux bourrelets 4 et passe par le milieu de l'armature de sommet 6).

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. L'armature de sommet 6 est surmontée radialement extérieurement d'une bande de roulement caoutchouteuse 9. Une armature de carcasse 7 est enroulée autour des deux tringles 5 dans chaque bourrelet 4, le retournement 8 de cette armature 7 étant par exemple disposé vers l'extérieur du pneumatique 1. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian EP. Une couche étanche 10 s'étend d'un bourrelet à l'autre radialement intérieurement relativement à l'armature de carcasse 7.

La bande de roulement 9 comporte quatre rainures 11, 12, 13 et 14 en allant du côté extérieur E vers le côté intérieur I. Chaque rainure comporte une face extérieure 11.1, 12.1, 13.1 et 14.1, un fond de rainure 11.2, 12.2, 13.2 et 14.2 et une face intérieure 11.3, 12.3, 13.3 et 14.3.

Cette bande de roulement 9 comporte aussi un renforcement circonférentiel 20 constitué d'un élément de renforcement 22 disposé de façon adjacente à la paroi extérieure 12.1 de la deuxième rainure 12. Cet élément de renforcement 20 s'appuie contre la paroi radialement extérieure de l'armature de sommet 6 et a une section sensiblement triangulaire. Cet élément de renforcement constitue en partie la paroi extérieure 12.1 de la rainure 12.

Le renforcement circonférentiel 20 s'oppose au basculement et au cisaillement de la nervure adjacente extérieurement à la rainure 12 lors de fortes sollicitations transversales du pneumatique orientées axialement de l'extérieur vers l'intérieur par exemple lors d'un virage du véhicule sur lequel est monté le pneumatique en direction du côté intérieur du pneumatique.

Les figures 2 à 9 présentent des coupes radiales de bandes de roulement selon différents modes de réalisation de l'invention dans le cas de sculptures à trois rainures circonférentielles.

La bande de roulement 30 de la figure 2 comporte trois rainures 11, 12 et 13 ainsi qu'un renforcement circonférentiel 32 comprenant deux éléments de renforcement circonférentiels 34 et 36. L'élément de renforcement circonférentiel 34 est disposé comme à la figure 1 de façon adjacente à la paroi extérieure 12.1 de la deuxième rainure 12. Cet élément de renforcement circonférentiel 34 s'appuie contre la paroi radialement extérieure de l'armature de sommet 6 et constitue en partie la paroi extérieure 12.1 de la rainure 12.

L'élément de renforcement circonférentiel 36 additionnel est disposé de façon adjacente à la paroi extérieure 11.1 de la première rainure 11. Il s'oppose par sa présence au cisaillement et au basculement des éléments de sculpture adjacents extérieurement à la première rainure 11 et coopère ainsi à l'action de l'élément de renforcement circonférentiel 34 lors de sollicitations transversales fortes du pneumatique.

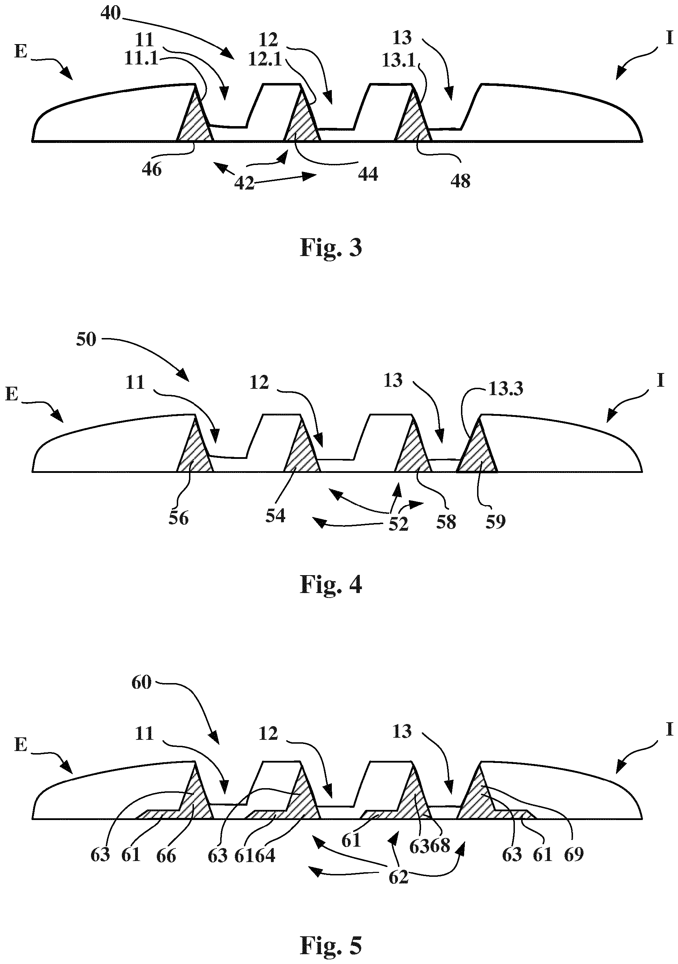

Le renforcement circonférentiel 42 de la bande de roulement 40 de la figure 3 comprend trois éléments de renforcement circonférentiels 44, 46 et 48. L'élément de renforcement circonférentiel additionnel 48 relativement au renforcement circonférentiel 42 est disposé de façon adjacente à la paroi extérieure 13.1 de la troisième rainure. Les trois éléments de renforcement circonférentiels de cette bande de roulement coopèrent pour s'opposer au basculement et au cisaillement des éléments de sculptures adjacents extérieurement aux trois rainures lors de sollicitations transversales fortes orientées de l'extérieur vers l'intérieur.

La figure 4 présente un mode de réalisation d'une bande de roulement 50 selon l'un des objets de l'invention dans lequel le renforcement circonférentiel 52 comporte comme à la figure 3 trois éléments 54, 56 et 58 et un élément de renforcement circonférentiel additionnel 59. Cet élément de renforcement circonférentiel 59 est disposé de façon adjacente à la paroi intérieure 13.3 de la rainure 13. Cet élément de renforcement circonférentiel 59 s'oppose au basculement et au cisaillement des éléments de sculpture adjacents intérieurement à la troisième rainure 13 lors de sollicitations transversales orientées de l'intérieur vers l'extérieur. Dans un tel cas, compte tenu de la dynamique des véhicules en virage, les sollicitations orientées de l'intérieur vers l'extérieur sont nettement moins fortes que celles orientées dans l'autre direction et il est inutile d'ajouter d'autres éléments de renforcement circonférentiels. Dans un virage pris à la limite d'adhérence, le pneumatique disposé sur le véhicule à l'intérieur du virage est fortement déchargé, compte tenu de la dynamique des véhicules en virage. Ce pneumatique intérieur virage est tout de même contributif de l'adhérence transversale par son épaule d'attaque, située vers le véhicule. La présence d'un renforcement dans cette épaule d'attaque permet d'augmenter la poussée globale à l'essieu, résultant de la poussée des deux pneumatiques du même essieu.

A la figure 5, la bande de roulement 60 comprend un renforcement circonférentiel 62 composé de quatre éléments de renforcement circonférentiels 64, 66, 68 et 69 disposés de façon similaire à la figure 4. Ces quatre éléments de renforcement circonférentiel ont une base 61 et une partie haute 63. Dans l'exemple de réalisation présenté, les bases 61 s'étendent sous les nervures ou éléments de sculptures adjacents aux trois rainures. Ces extensions renforcent la rigidification apportée par les différents éléments de renforcement circonférentiels. La hauteur radiale des bases 61 est strictement inférieure à la position radiale des fonds des rainures. Le fond des nervures est ainsi toujours constitué uniquement par le mélange de la bande de roulement.

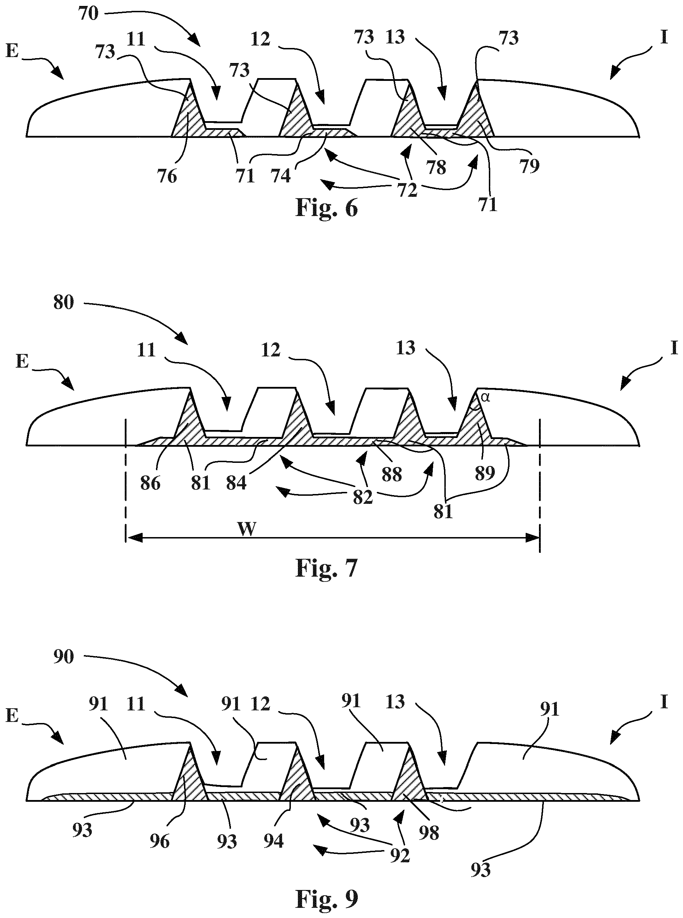

A la figure 6, la bande de roulement 70 comprend un renforcement circonférentiel 72 composé comme à la figure 5 de quatre éléments de renforcement circonférentiel 74, 76, 78 et 79. Ces éléments de renforcement circonférentiel comportent des parties hautes 73 et des bases 71 et sont tels que leurs bases 71 s'étendent sous les rainures adjacentes. Comme précédemment, ces extensions renforcent la rigidification apportée par les différents éléments de renforcement circonférentiel.

À la figure 7, la bande de roulement 80 comporte un renforcement circonférentiel 82 constitué de quatre éléments de renforcement circonférentiel 84, 86, 88 et 89 tels que leurs bases 81 sont jointives axialement et s'étendent continument d'un côté à l'autre de la bande de roulement. Cette base 81 est ainsi en contact direct continument avec la surface radialement extérieure de l'architecture de sommet 6 du pneumatique auquel la bande de roulement est destinée et a une action marquée de rigidification de l'ensemble du sommet 2 de ce pneumatique.

La largeur axiale des bases 81 jointives axialement couvre au moins la moitié de la largeur axiale de la bande de roulement et au plus la largeur axiale W de l'armature de sommet 6. Le fait que les bases soient continues renforce la résistance au basculement de l'ensemble du bloc sommet lors de sollicitations transversales et le fait qu'elles ne s'étendent pas au-delà de la largeur axiale de l'armature de sommet 6 favorise la mise à plat des épaules et limite la résistance au roulement du pneumatique.

La forme des éléments de renforcement circonférentiel présentés est triangulaire mais cette forme peut varier et les parois latérales peuvent être concaves, convexes ou en escaliers notamment sans sortir du cadre de cet invention.

Dans les exemples présentés, l'angle α fait par ces deux parois latérales est de l'ordre de 40 degrés, soit entre 35 et 45 degrés.

La hauteur radiale des éléments de renforcement circonférentiel peut atteindre la face de contact des éléments de sculpture lorsque le pneumatique est neuf, mais aussi être inférieure. Elle ne doit pas être inférieure à la demi-hauteur des éléments de sculpture pour pouvoir avoir une action pendant toute la durée de vie du pneumatique.

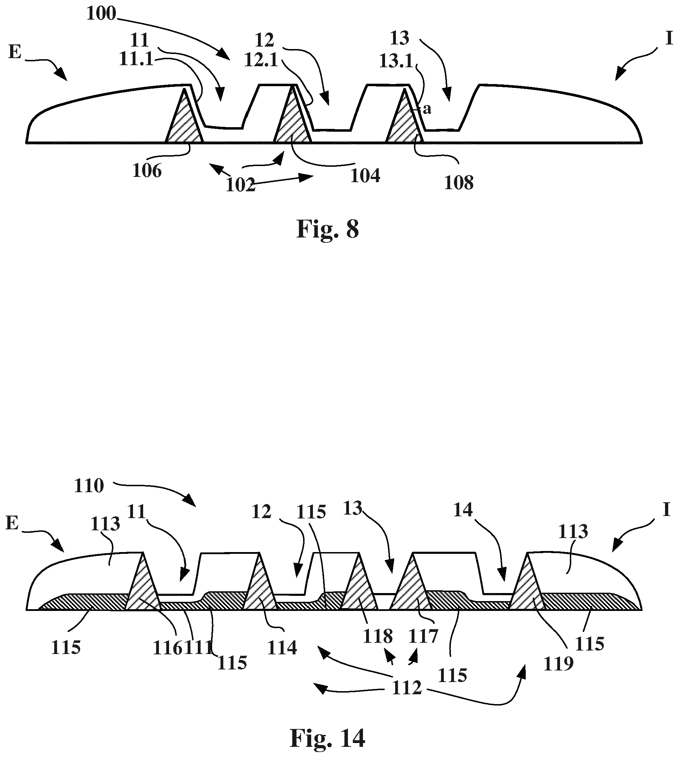

La figure 8 présente une bande de roulement 100 avec un renforcement circonférentiel 102 comportant trois éléments de renforcement circonférentiel 104, 106 et 108 disposés comme à la figure 3 à proximité des trois rainures et extérieurement. Mais, dans cet exemple, les parois latérales intérieures des trois éléments de renforcement circonférentiel ne constituent pas une partie des faces extérieures des nervures mais sont décalées axialement extérieurement pour s'écarter de ces faces extérieures des nervures d'une distance *a* de 1 à 8 mm et préférentiellement de 2 à 5 mm. Ce décalage permet de ne pas perturber le moulage des nervures lors de la vulcanisation des pneumatiques sans diminuer l'efficacité des éléments de renforcement circonférentiel.

À cette figure 8, on note aussi que l'élément de renforcement circonférentiel 104 a sa partie haute qui s'étend radialement jusqu'à la face extérieure de l'élément de sculpture. Cela facilite l'évacuation des charges électrostatiques en raison du caractère conducteur du mélange de l'élément de renforcement circonférentiel.

La figure 9 présente une bande de roulement 90 dont le renforcement circonférentiel 92 se compose de trois éléments de renforcement circonférentiel 94, 96 et 98 comme illustré à la figure 3. Cette bande de roulement 90 est constituée d'un premier mélange caoutchouteux 91 disposée radialement extérieurement et formant notamment les faces de contact des éléments de sculpture. Cette bande de roulement 90 comprend aussi un deuxième mélange caoutchouteux 93 radialement intérieurement et destiné à être en contact avec la surface radialement extérieure de l'architecture de sommet 6. Ce deuxième mélange 93 constitue une « sous-couche ». Il est à noter que les trois éléments de renforcement circonférentiel sont toujours en contact direct avec la surface radialement extérieure de l'architecture du sommet du pneumatique à associer à cette bande de roulement.

Selon l'objectif du concepteur du pneumatique, le mélange de cette sous-couche peut être à faible hystérèse et ainsi améliorer la résistance au roulement du pneumatique ou être plus rigide que l'autre mélange constituant de la bande de roulement, dans ce cas la sous-couche a une action de rigidification du sommet du pneumatique. Toutes les particularités du renforcement citées auparavant sont compatibles avec l'utilisation de cette sous-couche. Cette sous-couche se situant au-dessus de la base des éléments de renforcement lorsque la base existe de manière à ce que le renforcement s'appuie directement et en priorité sur l'armature sommet. C'est-à-dire sur le calandrage de la nappe de l'architecture sommet disposée radialement la plus extérieure.

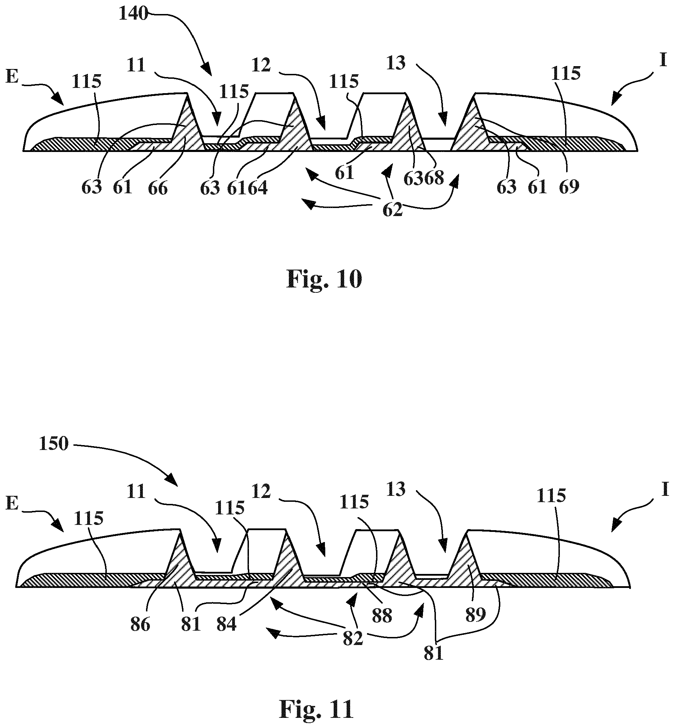

Les figures 10 et 11 présentent des modes de réalisation selon un objet de l'invention dans lesquels la bande de roulement comporte une sous-couche.

La figure 10 présente une bande de roulement 140 similaire à celle de la figure 5 et comportant une sous-couche 115. Comme indiqué précédemment, cette sous-couche est disposée radialement extérieurement aux bases 61 du renforcement 62.

La figure 11 présente une bande de roulement 150 similaire à celle de la figure 7 et comportant une sous-couche 115. Comme indiqué précédemment, cette sous-couche est disposée radialement extérieurement aux bases 81 du renforcement 82.

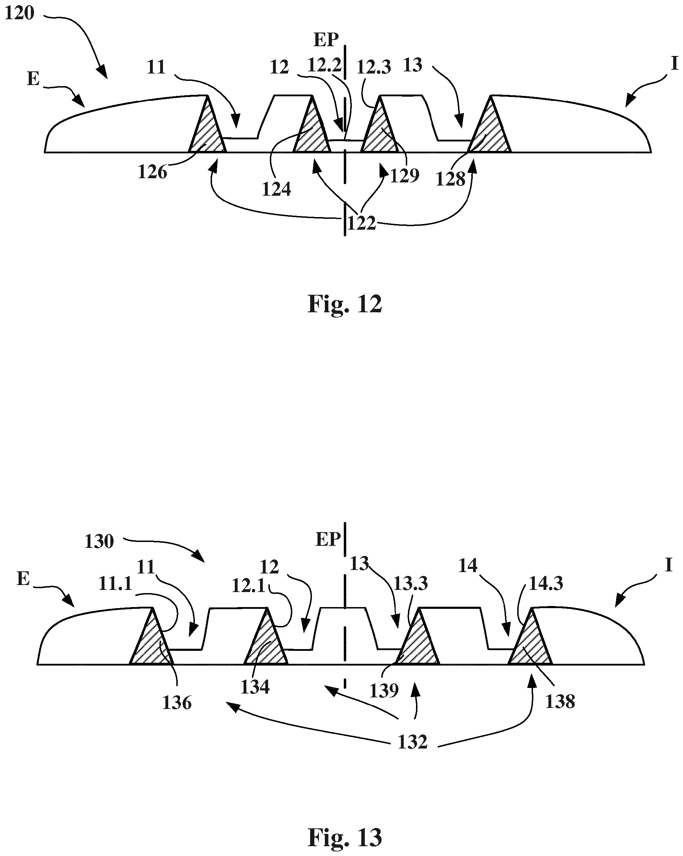

Les figures 12 et 13 présentent un autre mode de réalisation d'un pneumatique selon un objet de l'invention dans lequel les renforcements circonférentiels sont disposés de façon symétrique dans la bande de roulement.

La bande de roulement 120 de la figure 12 comporte trois rainures 11, 12 et 13 ainsi qu'un renforcement circonférentiel 122. Dans ce mode de réalisation selon l'un des objets de l'invention, le renforcement circonférentiel 122 comprend quatre éléments de renforcement circonférentiels 124, 126, 128 et 129 disposés de façon symétrique relativement au plan médian EP. Les trois éléments de renforcement circonférentiels 124, 126, et 128 sont disposés comme les éléments de renforcement 54, 56 et 59 de la figure 4. En revanche, l'élément de renforcement 129 est disposé axialement intérieurement relativement à la rainure 12 et forme ainsi au moins une partie de la face intérieure 12.3 de cette rainure. Le renforcement circonférentiel 122 n'apporte ainsi aucune asymétrie à la bande de roulement 120 ce qui facilite le montage d'un tel pneumatique lorsqu'il ne comporte pas d'autre asymétrie. Un tel pneumatique symétrique peut ainsi avoir son côté extérieur monté vers l'extérieur ou l'intérieur d'un véhicule, ces côtés intérieur et extérieur ne sont dans ce cas qu'une référence géométrique.

La figure 13 présente une bande de roulement 130 avec quatre rainures 11, 12, 13, 14 et un renforcement circonférentiel 132. Ce renforcement circonférentiel 132 comporte quatre éléments de renforcement circonférentiels 134, 136, 138 et 139. Comme dans le mode de réalisation de la figure 12, ces quatre éléments de renforcement circonférentiels sont disposés de façon symétrique relativement au plan médian EP du pneumatique. Les éléments de renforcement 134 et 136 sont disposés axialement extérieurement relativement aux rainures 12 et 11 respectivement; les éléments de renforcement 138 et 139 sont disposés axialement intérieurement relativement aux rainures 14 et 13 respectivement.

Les éléments de renforcement circonférentiel doivent servir de point d'appui pour s'opposer au cisaillement et au basculement des éléments de sculpture qui les contiennent. Pour cela le mélange constituant ces éléments de renforcement circonférentiel est de préférence très notablement plus rigide que celui de la bande de roulement. À titre préférentiel, le module dynamique G* mesuré à 60°C, à 10 Hz et sous une contrainte de cisaillement alterné de 0,7 MPa est supérieur à 20 MPa, et très préférentiellement supérieur à 30 MPa.

De telles mélanges sont décrits notamment dans la demande WO 2011/045342 A1 des Demanderesses.

Le tableau 1 ci-dessous donne un exemple d'une telle formulation.

**Tableau 1**

| Constituant | C.1 |
|---|---|
| NR (1) | 100 |
| Noir de carbone (2) | 70 |
| Résine Formophénolique (3) | 12 |
| ZnO (4) | 3 |
| Acide stéarique (5) | 2 |
| 6PPD (6) | 2.5 |
| HMT (7) | 4 |
| Soufre | 3 |
| CBS (8) | 2 |

| | |
|---|---|
| (1) Caoutchouc Naturel ; (2) Noir de carbone N326 (dénomination selon la norme ASTM D-1765) ; (3) Résine formophénolique novolac (« Peracit 4536K » de la société Perstorp) ; (4) Oxyde de zinc (grade industriel - société Umicore) ; (5) Stéarine (« Pristerene 4931 » de la société Uniqema) ; (6) N-1,3-diméthylbutyl-N-phénylparaphénylènediamine (Santoflex 6-PPD de la société Flexsys) ; (7) Hexaméthylènetétramine (de la société Degussa) ; (8) N-cyclohexyl-benzothiazyl sulphénamide(Santocure CBS de la société Flexsys). | |

Cette formulation permet d'obtenir des mélanges de rigidité élevée notamment grâce à l'action combinée d'une résine époxyde et d'un durcisseur aminé. Le module de cisaillement G* mesuré sous une contrainte de cisaillement alternée de 0,7 MPa à 10 Hz et 60 degrés Celsius est de 30,3 MPa.

Ce matériau très rigide pour les renforcements circonférentiels est de préférence utilisé dans des bandes de roulement de faible rigidité avec des modules dynamiques G* inférieurs à 1,3 MPa et de préférence inférieurs ou égaux à 1,1 MPa.

Le tableau 2 suivant donne un exemple de formulation adaptée :

**Tableau 2**

| Composition | B1 (pce) |
|---|---|
| SBR (a) | **100** |
| Silice (b) | **110** |
| Agent de couplage (c) | **9** |
| Plastifiant liquide (d) | **20** |
| Plastifiant résine (e) | **50** |
| Noir | **5** |
| Oxyde de zinc | **3** |
| Acide stéarique | **2** |
| Antioxydant (f) | **2** |
| Accélérateur (g) | **2** |
| DPG | **2** |
| Soufre | **1** |

| | |
|---|---|
| Les formulations sont données en masse. (a) SBR avec 27% styrène, butadiène -1,2 :5%, cis-1,4 : 15%, trans -1,4: 80% Tg -48°C (b) Silice « Zeosil1165MP » de la société Solvay de surface BET 160m²/g (c) Silane TESPT « SI69 » de la société Evonik (d) Huile TDAE « Flexon 630 » de la société Shell (e) Résine « Escorez 2173 » de la société Exxon (f) Antioxydant « Santoflex 6PPD » de la société Solutia (g) Accélérateur « Santocure CBS » de la société Solutia pce: partie en poids pour 100 parties d'élastomère. | |

Le module dynamique après vulcanisation est de 0,9 MPa.

L'homme du métier, concepteur de pneumatiques pourra adapter le nombre et la position des éléments de renforcement circonférentiel pour obtenir une résistance optimale aux basculement et cisaillement des nervures et éléments de sculpture et cela pour des pneumatiques asymétriques ou non.

### Tests

Les mélanges caoutchouteux sont caractérisés comme indiqué ci-après.

Les propriétés mécaniques dynamiques sont bien connues des hommes du métier. Ces propriétés sont mesurées sur un viscoanalyseur (Metravib VA4000) avec des éprouvettes moulées à partir de mélanges crus ou d'éprouvettes collées ensemble à partir de mélanges vulcanisés. Les éprouvettes utilisées sont décrites dans la norme ASTM D 5992-96 (on utilise la version publiée en septembre 2006 mais initialement approuvée en 1996) à la figure X2.1 (éprouvettes circulaires). Le diamètre « d » des éprouvettes est de 10 mm (la section circulaire est ainsi de 78.5 mm²), l'épaisseur « L » de chaque portion de mélange est de 2 mm, donnant un rapport « d/L » de 5 (par opposition au standard ISO 2856, mentionné au paragraphe X2.4 du standard ASTM, qui recommande une valeur d/L de 2).

On enregistre la réponse d'un échantillon de composition vulcanisée soumis à une sollicitation sinusoïdale en cisaillement simple alterné, à la fréquence de 10 Hz. La contrainte de cisaillement maximale imposée est de 0.7 MPa.

Les mesures sont faites avec une variation de température de 1,5°C par minute, d'une température minimale inférieure à la température de transition vitreuse (Tg) du mélange ou caoutchouc jusqu'à une température maximale supérieure à 100°C. Avant le commencement du test, l'éprouvette est conditionnée à la température minimale pendant 20 minutes pour garantir une bonne homogénéité de température dans l'éprouvette.

Le résultat utilisé est notamment la valeur du module dynamique G* à la température de 60°C.

Les performances des pneumatiques selon les objets de l'invention ont été mesurées lors des essais suivants :
- Distance de freinage longitudinal : on mesure la distance nécessaire pour passer de 80 à 20 km/h sur sol mouillé.
- Rigidité de dérive : on mesure en roulage la force axiale de poussée latérale du pneumatique pour un angle de dérive donné.
- Test de vitesse sur circuit de Charade : le test consiste à faire quatre tours de circuit et la performance retenue est la moyenne des quatre chronos. On fait un test avec des pneumatiques témoins au début et à la fin des essais pour pouvoir corriger une éventuelle dérive par exemple liée à une évolution des conditions de température air et température sol.

### Essais

La figure 14 présente de façon très schématique une coupe de la bande de roulement des pneumatiques utilisés pour les tests véhicules.

La bande de roulement 110 comporte quatre rainures 11, 12, 13 et 14. Deux mélanges constituent la bande de roulement, le mélange 113 radialement extérieur et la sous-couche 115. Elle comporte aussi un renforcement circonférentiel 112 comprenant cinq éléments de renforcement circonférentiel 114, 116, 117, 118 et 119. Les éléments de renforcement circonférentiel 114, 116 et 118 sont disposés chacun de façon adjacente à une face extérieure d'une des trois nervures disposées le plus vers l'extérieur. Les éléments de renforcement circonférentiel 119 et 120 sont eux disposés de façon adjacente à une face intérieure d'une des deux nervures disposées le plus vers l'intérieur. La troisième nervure est ainsi renforcée par deux éléments de renforcement circonférentiel. Chaque élément de renforcement circonférentiel est de forme sensiblement triangulaire, est destiné à être en contact direct avec la surface radialement extérieure de l'architecture du sommet du pneumatique dont doit faire partie la bande de roulement et l'une de ses parois latérales constitue en partie une face latérale d'une nervure. La sous-couche est interrompue par les éléments de renforcement circonférentiel. Dans le cas d'espèce, la sous-couche a un module dynamique de cisaillement alterné à 60°C de l'ordre de 7 MPa.

La bande de roulement 110 des pneumatiques d'essais a été réalisée de façon artisanale. Un profilé de longueur correspondant à un multiple du périmètre d'un pneumatique d'essai des deux mélanges constituant la bande de roulement 113 et la sous-couche 115 a été obtenu par coextrusion. Ce profilé comportait quatre rainures.

Des profilés de même longueur correspondant aux quatre éléments de renforcement circonférentiel ont aussi été réalisés par extrusion.

Puis quatre volumes de mélange correspondant chacun au volume et à la forme d'un élément de renforcement circonférentiel ont été retirés du profilé coextrudé des deux mélanges de la bande de roulement avec une gouge chauffante et on a mis en place manuellement les quatre éléments de renforcement circonférentiel dans les quatre volumes ainsi préparés.

Les bandes de roulement ainsi assemblées ont alors été mises en place de façon bien connue d'un homme du métier au sommet d'un pneumatique pour le compléter. Les pneumatiques complets ont alors été vulcanisés comme usuellement dans une presse de cuisson.

Les pneumatiques de référence sont de marque Michelin, types Pilot Sport 3, de dimension 225/45 R17, pression 2.3 bars à l'avant et 2.7 bars à l'arrière et le véhicule de l'essai un véhicule de marque Renault Clio Cup.

Ces pneumatiques de référence R1 ont une bande de roulement avec un mélange dont le module dynamique de cisaillement G* à 60°C est de 1,4 MPa.

D'autres pneumatiques de référence R2 ont aussi été réalisés. La bande de roulement de ces pneumatiques est identique à celle de la figure 10 à l'exception des quatre éléments de renforcement circonférentiel et de la sous-couche qui sont absents. Ces pneumatiques ont une sculpture constituée uniquement par les quatre rainures circonférentielles indiquées.

Le mélange de bande de roulement des pneumatiques de référence R2 a une valeur de G* à 60°C de 0,9 MPa.

Les pneumatiques d'essais El ont un mélange de bande de roulement dont la valeur de G* est de 0,9 MPa et les éléments de renforcement circonférentiel sont réalisés avec un mélange dont la valeur de G* est de 30 MPa. Ces pneumatiques El ont un renforcement circonférentiel correspondant à celui de la figure 10 mais pas de sous-couche.

D'autres pneumatiques E2 conformes à l'invention ont été réalisés avec une bande de roulement et un renforcement circonférentiel comme El mais en plus une sous-couche de module dynamique G* égal à 5 MPa. Cette sous-couche est interrompue par les quatre éléments de renforcement circonférentiel comme indiqué sur la figure 10.

Les éléments de renforcement circonférentiel ont un angle entre leurs parois latérales de 40 degrés.

**Tableau 3**

| | Freinage sol mouillé 80 - 20 km/h | Rigidité de dérive |
|---|---|---|
| R1 | 100 | 100 |
| R2 | 115 | 85 |
| E1 | 110 | 100 |

L'utilisation d'une bande de roulement de plus faible rigidité diminue très normalement la rigidité de dérive du pneumatique et améliore la performance freinage sur sol mouillé.

Le pneumatique testé selon l'invention permet d'obtenir un gain de 10 points dans la performance de freinage sur sol mouillé tout en retrouvant une rigidité de dérive comparable à celle du témoin R1.

**Tableau 4**

| | Chrono | Gain chrono |
|---|---|---|
| R1 | 2 min 18 s | - |
| R2 | 2 min 17.7 | 0.3 s |
| El | 2 min 17.2 | 0.8 s |
| E2 | 2 min 17.0 | 1.0 s |

Un gain est considéré comme significatif à partir de 0.3 s sur ce circuit.

On constate que l'utilisation d'une bande de roulement dont le mélange est nettement moins rigide n'entraîne qu'un gain à peine significatif alors que les résultats obtenus avec les pneumatiques comportant des renforcements circonférentiels selon l'invention sont très nettement marqués.

La présence des renforcements circonférentiels dans la bande de roulement permet ainsi d'utiliser pleinement le potentiel d'adhérence de mélanges de bande de roulement de plus faible rigidité.

Par la combinaison du choix du mélange de la bande de roulement, du choix du mélange de la sous-couche et des renforcements circonférentiels il est alors possible pour le concepteur pneumatique de décaler les compromis entre l'adhérence et respectivement le comportement et la résistance au roulement, ce qui n'est pas atteignable par le choix d'un seul matériau de la bande de roulement.

## Revendications

1. Pneumatique (1) ayant un axe de rotation et un plan médian (EP) perpendiculaire à l'axe de rotation, et comprenant :
- deux bourrelets (4) ;
- deux flancs (3) reliés aux bourrelets ;
- un sommet (2) relié aux extrémités des deux flancs avec :
• une armature de sommet (6) ; et
• une bande de roulement (9, 30, 40, 50, 60, 70, 80, 90, 100, 110, 120, 130, 140, 150) radialement extérieure, la bande de roulement comprenant :
∘ une pluralité d'éléments de sculpture avec des faces latérales (11.1, 11.3, 12.1, 12.3, 13.1, 13.3, 14.1, 14.3) et une face de contact destinée à venir en contact avec la chaussée pendant le roulage du pneumatique ;
∘ une pluralité de rainures circonférentielles (11, 12, 13, 14) chacune délimitée par des faces latérales d'éléments de sculpture adjacents, en vis-à-vis l'une par rapport à l'autre, et délimitée par un fond (11.2, 12.2, 13.2, 14.2) ;
∘ un renforcement circonférentiel (20, 32, 42, 52, 62, 72, 82, 92, 102, 112, 122, 132) constitué d'un mélange caoutchouteux de rigidité supérieure à la rigidité du mélange caoutchouteux du reste de la bande de roulement ;
**caractérisé en ce que,** le pneumatique ayant un côté extérieur (E) et un côté intérieur (I), le renforcement circonférentiel comporte un élément de renforcement (22, 34, 36, 44, 46, 48, 54, 56, 58, 59, 64, 66, 68, 69, 74, 76, 78, 79, 84, 86, 88, 89, 94, 96, 98, 104, 106, 108, 114, 116, 117, 118, 119, 124, 126, 128, 129, 134, 136, 138, 139) placé dans les éléments de sculpture disposés axialement extérieurement relativement à l'une des première (11) et deuxième (12) rainures circonférentielles de la bande de roulement en allant de l'extérieur vers l'intérieur et axialement à proximité de ladite rainure circonférentielle, **en ce que** l'élément de renforcement s'étend radialement de la surface radialement extérieure de ladite armature de sommet (6) vers l'extérieur de ladite bande de roulement avec une largeur axiale qui diminue progressivement et sur une hauteur partielle ou totale de l'épaisseur de la bande de roulement, **en ce que** le fond desdites rainures circonférentielles est constitué par le mélange caoutchouteux du reste de la bande de roulement et **en ce que** les éléments de sculpture disposés axialement intérieurement relativement à ladite première (11) rainure circonférentielle ne comportent pas d'éléments de renforcement disposés à proximité des faces axialement intérieures de ladite rainure.

2. Pneumatique (1) selon la revendication 1, dans lequel le renforcement circonférentiel (32, 42, 52, 62, 72, 82, 92, 102, 112, 122, 132) comporte deux éléments de renforcement placées respectivement dans les éléments de sculpture adjacents extérieurement à la première (11) et à la deuxième (12) rainure circonférentielle de la bande de roulement en allant de l'extérieur vers l'intérieur et axialement à proximité desdites première (11) et deuxième (12) rainures circonférentielles.

3. Pneumatique selon l'une des revendications 1 et 2, dans lequel, la bande de roulement (40, 50, 60, 70, 80, 90, 100, 110, 140, 150) ayant au moins trois rainures circonférentielles (11, 12, 13), le renforcement circonférentiel (42, 52, 62, 72, 82, 92, 102, 112) comporte aussi un élément de renforcement placé dans les éléments de sculpture adjacents extérieurement à la troisième rainure circonférentielle (13) de la bande de roulement en allant de l'extérieur vers l'intérieur et axialement à proximité de ladite troisième rainure circonférentielle.

4. Pneumatique selon l'une quelconque des revendications précédentes, dans lequel le renforcement circonférentiel (42, 52, 62, 72, 82, 92, 102, 112) comporte des éléments de renforcement placés dans tous les éléments de sculpture adjacents extérieurement à une rainure circonférentielle et axialement à proximité des faces axialement extérieures desdites rainures circonférentielles.

5. Pneumatique selon l'une quelconque des revendications précédentes, dans lequel le renforcement circonférentiel (52, 62, 72, 82, 112, 122, 132) comporte aussi un élément de renforcement placé dans les éléments de sculpture adjacents intérieurement à la rainure circonférentielle la plus proche axialement du côté intérieur du pneumatique.

6. Pneumatique selon la revendication 5, dans lequel, la bande de roulement comportant au moins quatre rainures circonférentielles, le renforcement circonférentiel (112, 132) comporte deux éléments de renforcement placés respectivement dans les éléments de sculpture adjacents intérieurement à la première et à la deuxième rainures circonférentielles de la bande de roulement en allant de l'intérieur vers l'extérieur et axialement à proximité desdites première et deuxième rainures circonférentielles.

7. Pneumatique selon l'une quelconque des revendications 1 à 3, dans lequel les éléments de renforcement circonférentiels (122, 132) sont disposés de façon symétrique relativement audit plan médian.

8. Pneumatique selon la revendication 7, dans lequel, la bande de roulement (122) ayant une rainure circonférentielle traversée par le plan médian, deux éléments de renforcement circonférentiels sont disposés axialement à proximité et de part et d'autre de ladite rainure circonférentielle traversée par ledit plan médian.

9. Pneumatique selon l'une quelconque des revendications précédentes, dans lequel l'angle des deux parois latérales du ou des éléments de renforcement est compris entre 35 et 45 degrés.

10. Pneumatique selon l'une quelconque des revendications précédentes, dans lequel, les éléments de renforcement comportant une base (61), dont la hauteur radiale est strictement inférieure à la distance entre le fond d'une rainure circonférentielle et la surface radialement extérieure de l'armature de sommet et une partie haute (63), , ladite partie haute s'étend radialement extérieurement jusqu'au moins la demi-hauteur des faces latérales des rainures circonférentielles adjacentes.

11. Pneumatique selon la revendication 10, dans lequel la partie haute des éléments de renforcement constitue au moins une partie de la face latérale de la rainure circonférentielle adjacente.

12. Pneumatique selon la revendication 10, dans lequel la partie haute des éléments de renforcement (104, 106, 108) est disposée à une distance axiale de 1 à 8 mm et préférentiellement de 2 à 5 mm de la face latérale de la rainure circonférentielle adjacente.

13. Pneumatique selon l'une quelconque des revendications précédentes, dans lequel la bande de roulement (90, 110, 140, 150) comporte deux mélanges caoutchouteux distincts (91, 93, 113, 115) disposés axialement l'un au-dessus de l'autre.

14. Pneumatique selon l'une quelconque des revendications précédentes, dans lequel le mélange caoutchouteux constitutif du renforcement circonférentiel a un module dynamique G* mesuré à 60°C à 10 Hz et sous une contrainte de cisaillement alterné de 0,7 MPa supérieur à 20 MPa et préférentiellement supérieur à 30 MPa.

15. Pneumatique selon l'une quelconque des revendications précédentes, dans lequel le mélange caoutchouteux du reste de la bande de roulement a un module dynamique G* mesuré à 60°C à 10 Hz et sous une contrainte de cisaillement alterné de 0,7 MPa inférieur ou égal à 1,3 MPa et préférentiellement inférieur à 1,1 MPa.

## Patentansprüche

1. Reifen (1) mit einer Drehachse und einer Mittelebene (EP), welche senkrecht zu der Drehachse liegt, und aufweisend:
- zwei Wülste (4);
- zwei mit den Wülsten verbundene Flanken (3);
- einen Scheitel (2), welcher mit den Enden der beiden Flanken verbunden ist, mit:
• einer Scheitelbewehrung (6); und
• einer radial äußeren Lauffläche (9, 30, 40, 50, 60, 70, 80, 90, 100, 110, 120, 130, 140, 150), wobei die Lauffläche aufweist:
∘ eine Vielzahl von Profilelementen mit seitlichen Flächen (11.1, 11.3, 12.1, 12.3, 13.1, 13.3, 14.1, 14.3) und einer Kontaktfläche, welche dafür vorgesehen ist, während des Abrollens des Reifens mit der Fahrbahn in Kontakt zu kommen;
∘ eine Vielzahl von umlaufenden Rillen (11, 12, 13, 14), welche jeweils von seitlichen Flächen von angrenzenden Profilelementen in Bezug zueinander begrenzt und von einem Boden (11.2, 12.2, 13.2, 14.2) begrenzt sind;
∘ eine umlaufende Verstärkung (20, 32, 42, 52, 62, 72, 82, 92, 102, 112, 122, 132), welche aus einer Kautschukmischung mit größerer Steifigkeit als die Steifigkeit der Kautschukmischung des Rests der Lauffläche besteht;
**dadurch gekennzeichnet, dass** der Reifen eine Außenseite (E) und eine Innenseite (I) aufweist, die umlaufende Verstärkung ein Verstärkungselement (22, 34, 36, 44, 46, 48, 54, 56, 58, 59, 64, 66, 68, 69, 74, 76, 78, 79, 84, 86, 88, 89, 94, 96, 98, 104, 106, 108, 114, 116, 117, 118, 119, 124, 126, 128, 129, 134, 136, 138, 139) aufweist, welches in den Profilelementen platziert ist, welche axial außen in Bezug auf eine der ersten (11) und zweiten (12) umlaufenden Rille der Lauffläche, wenn von außen nach innen gegangen wird, und axial in der Nähe der umlaufenden Rille angeordnet sind, **dass** sich das Verstärkungselement von der radial äußeren Fläche der Scheitelbewehrung (6) radial in Richtung auf den Außenbereich der Lauffläche mit einer axialen Breite erstreckt, welche schrittweise und über eine partielle oder gesamte Höhe der Dicke der Lauffläche abnimmt,
**dass** der Boden der umlaufenden Rillen aus der Kautschukmischung des Rests der Lauffläche besteht und **dass** die Profilelemente, welche axial innerhalb in Bezug auf die erste (11) umlaufende Rille angeordnet sind, keine Verstärkungselemente aufweisen, welche in der Nähe der axial inneren Flächen der Rille angeordnet sind.

2. Reifen (1) nach Anspruch 1, bei welchem die umlaufende Verstärkung (32, 42, 52, 62, 72, 82, 92, 102, 112, 122, 132) zwei Verstärkungselemente aufweist, welche jeweils in den Profilelementen platziert sind, welche an die erste (11) und an die zweite (12) umlaufende Rille der Lauffläche außen angrenzen, wenn von Außen nach Innen gegangen wird, und axial sich in der Nähe der umlaufenden ersten (11) und zweiten (12) Rille befinden.

3. Reifen nach einem der Ansprüche 1 und 2, bei welchem die Lauffläche (40, 50, 60, 70, 80, 90, 100, 110, 140, 150) mindestens drei umlaufende Rillen (11, 12, 13) aufweist, die umlaufende Verstärkung (42, 52, 62, 72, 82, 92, 102, 112) auch ein Verstärkungselement aufweist, welches in den Profilelementen platziert ist, welche außen an die dritte umlaufende Rille (13) der Lauffläche angrenzen, wenn von Außen nach Innen gegangen wird, und axial sich in der Nähe der umlaufenden dritten Rille befinden.

4. Reifen nach einem der vorhergehenden Ansprüche, bei welchem die umlaufende Verstärkung (42, 52, 62, 72, 82, 92, 102, 112) Verstärkungselemente aufweist, welche in sämtlichen Profilelementen platziert sind, welche außen an eine umlaufende Rille angrenzen und sich axial in der Nähe der axial äußeren Fläche der umlaufenden Rillen befinden.

5. Reifen nach einem der vorhergehenden Ansprüche, bei welchem die umlaufende Verstärkung (52, 62, 72, 82, 112, 122, 132) auch ein Verstärkungselement aufweist, welches in den Profilelementen platziert ist, welche innen am dichtesten axial auf der inneren Seite des Reifens an die umlaufende Rille angrenzen.

6. Reifen nach Anspruch 5, bei welchem die Lauffläche mindestens vier umlaufende Rillen aufweist, die umlaufende Verstärkung (112, 132) zwei Verstärkungselemente aufweist, welche jeweils in den Profilelementen platziert sind, welche an die erste und an die zweite umlaufende Rille der Lauffläche innen angrenzen, wenn von Außen nach Innen gegangen wird, und axial sich in der Nähe der umlaufenden ersten und zweiten Rille befinden.

7. Reifen nach einem der Ansprüche 1 bis 3, bei welchem die umlaufenden Verstärkungselemente (122, 132) auf symmetrische Weise in Bezug auf die Mittelebene angeordnet sind.

8. Reifen nach Anspruch 7, bei welchem die Lauffläche (122) eine umlaufende Rille aufweist, welche von der Mittelebene durchdrungen wird, wobei zwei Verstärkungselemente axial in der Nähe und beiderseits der umlaufenden Rille, welche von der Mittelebene durchdrungen wird, angeordnet sind.

9. Reifen nach einem der vorhergehenden Ansprüche, bei welchem der Winkel der beiden seitlichen Wände des oder der Verstärkungselemente zwischen 35 und 45 Grad liegt.

10. Reifen nach einem der vorhergehenden Ansprüche, bei welchem die Verstärkungselemente eine Basis (61), deren radiale Höhe unbedingt kleiner als der Abstand zwischen dem Boden einer umlaufenden Rille und der radial äußeren Fläche der Scheitelbewehrung ist, und einen oberen Abschnitt (63) aufweisen, wobei sich der obere Abschnitt radial außen bis zumindest der halben Höhe der seitlichen Flächen der angrenzenden umlaufenden Rillen erstreckt.

11. Reifen nach Anspruch 10, bei welchem der obere Abschnitt der Verstärkungselemente aus mindestens einem Abschnitt der seitlichen Fläche der angrenzenden, umlaufenden Rille besteht.

12. Reifen nach Anspruch 10, bei welchem der obere Abschnitt der Verstärkungselemente (104, 106, 108) in einem axialen Abstand von 1 bis 8 mm und vorzugsweise von 2 bis 5 mm von der seitlichen Fläche der angrenzenden, umlaufenden Rille angeordnet ist.

13. Reifen nach einem der vorhergehenden Ansprüche, bei welchem die Lauffläche (90, 110, 140, 150) zwei verschiedene Kautschukmischungen (91, 93, 113, 115) aufweist, welche axial übereinander angeordnet sind.

14. Reifen nach einem der vorhergehenden Ansprüche, bei welchem die wesentliche Kautschukmischung der umlaufenden Verstärkung einen Dynamikmodul G*, welcher bei 60°C bei 10 Hz und unter einer wechselnden Scherbeanspruchung von 0,7 MPa gemessen wird, von größer als 20 MPa und vorzugsweise größer als 30 MPa aufweist.

15. Reifen nach einem der vorhergehenden Ansprüche, bei welchem die Kautschukmischung des Rests der Lauffläche einen Dynamikmodul G*, welcher bei 60°C bei 10 Hz und unter einer wechselnden Scherbeanspruchung von 0,7 MPa gemessen wird, von kleiner als oder gleich 1,3 MPa und vorzugsweise kleiner als 1,1 MPa aufweist.

## Claims

1. Tyre (1) having an axis of rotation and a median plane (EP) perpendicular to the axis of rotation, and comprising:
- two beads (4);
- two sidewalls (3) connected to the beads;
- a crown (2) connected to the ends of the two sidewalls and having:
• a crown reinforcement (6); and
• a tread (9, 30, 40, 50, 60, 70, 80, 90, 100, 110, 120, 130, 140, 150) radially on the outside, the tread comprising:
∘ a plurality of tread pattern elements having lateral faces (11.1, 11.3, 12.1, 12.3, 13.1, 13.3, 14.1, 14.3) and a contact face intended to come into contact with the road surface while the tyre is being driven on;
∘ a plurality of circumferential grooves (11, 12, 13, 14), each of which is delimited by lateral faces of adjacent tread pattern elements that face one another, and is delimited by a bottom (11.2, 12.2, 13.2, 14.2);
∘ a circumferential reinforcement (20, 32, 42, 52, 62, 72, 82, 92, 102, 112, 122, 132) made up of a rubber mixture with a stiffness greater than the stiffness of the rubber mixture of the rest of the tread;
**characterized in that,** the tyre having an outer side (E) and an inner side (I), the circumferential reinforcement has a reinforcing element (22, 34, 36, 44, 46, 48, 54, 56, 58, 59, 64, 66, 68, 69, 74, 76, 78, 79, 84, 86, 88, 89, 94, 96, 98, 104, 106, 108, 114, 116, 117, 118, 119, 124, 126, 128, 129, 134, 136, 138, 139) positioned in the tread pattern elements disposed axially on the outside with respect to one of the first (11) and second (12) circumferential grooves of the tread from the outside to the inside and axially close to said circumferential groove, **in that** the reinforcing element extends radially from the radially outer surface of said crown reinforcement (6) towards the outside of said tread with an axial width which decreases gradually and over a partial or total height of the thickness of the tread, **in that** the bottom of said circumferential groove is made up of same rubber mixture as the rest of the tread and **in that** the tread pattern elements disposed axially on the inside with respect to said first circumferential groove (11) do not have reinforcing elements disposed close to the axially inner faces of said groove.

2. Tyre (1) according to Claim 1, wherein the circumferential reinforcement (32, 42, 52, 62, 72, 82, 92, 102, 112, 122, 132) has two reinforcing elements positioned respectively in the tread pattern elements that are externally adjacent to the first (11) and the second (12) circumferential groove of the tread from the outside to the inside and axially close to said first (11) and second (12) circumferential grooves.

3. Tyre according to either of Claims 1 and 2, wherein, the tread (40, 50, 60, 70, 80, 90, 100, 110, 140, 150) having at least three circumferential grooves (11, 12, 13), the circumferential reinforcement (42, 52, 62, 72, 82, 92, 102, 112) also has a reinforcing element positioned in the tread pattern elements that are externally adjacent to the third circumferential groove (13) of the tread from the outside to the inside and axially close to said third circumferential groove.

4. Tyre according to any one of the preceding claims, wherein the circumferential reinforcement (42, 52, 62, 72, 82, 92, 102, 112) has reinforcing elements positioned in all of the tread pattern elements that are externally adjacent to a circumferential groove and axially close to axially outer face of said circumferential grooves.

5. Tyre according to any one of the preceding claims, wherein the circumferential reinforcement (52, 62, 72, 82, 112, 122, 132) also has a reinforcing element positioned in the tread pattern elements that are internally adjacent to the circumferential groove axially closest to the inner side of the tyre.

6. Tyre according to Claim 5, wherein, the tread having at least four circumferential grooves, the circumferential reinforcement (112, 132) has two reinforcing elements positioned respectively in the tread pattern elements that are internally adjacent to the first and the second circumferential grooves of the tread from the inside to the outside and axially close to said first and second circumferential grooves.

7. Tyre according to any one of Claims 1 to 3, wherein the circumferential reinforcing elements (122, 132) are disposed symmetrically with respect to said median plane.

8. Tyre according to Claim 7, wherein, the tread (122) having a circumferential groove through which the median plane passes, two circumferential reinforcing elements are disposed axially close to and on either side of said circumferential groove through which said median plane passes.

9. Tyre according to any one of the preceding claims, wherein the angle of the two lateral walls of the reinforcing element(s) is between 35 and 45 degrees.

10. Tyre according to any one of the preceding claims, wherein, the reinforcing elements having a base (61) with a radial height strictly less than the distance between the bottom of a circumferential groove and the radially outer surface of the crown reinforcement and a top part (63), said top part extends radially towards the outside to at least half the height of the lateral faces of the adjacent circumferential grooves.

11. Tyre according to Claim 10, wherein the top part of the reinforcing elements at least partially forms the lateral face of the adjacent circumferential groove.

12. Tyre according to Claim 10, wherein the top part of the reinforcing elements (104, 106, 108) is disposed at an axial distance of 1 to 8 mm and preferably 2 to 5 mm from the lateral face of the adjacent circumferential groove.

13. Tyre according to any one of the preceding claims, wherein the tread (90, 110, 140, 150) comprises two different rubber mixtures (91, 93, 113, 115) disposed axially one on top of the other.

14. Tyre according to any one of the preceding claims, wherein the rubber mixture of which the circumferential reinforcement is made has a dynamic modulus G*, measured at 60°C at 10 Hz and under an alternating shear stress of 0.7 MPa, of greater than 20 MPa and preferably greater than 30 MPa.

15. Tyre according to any one of the preceding claims, wherein the rubber mixture of the rest of the tread has a dynamic modulus G*, measured at 60°C at 10 Hz and under an alternating shear stress of 0.7 MPa, of less than or equal to 1.3 MPa and preferably less than 1.1 MPa.
